# EUROPÄISCHE PATENTANMELDUNG

(11) **EP 4 696 727 A1**
(43) Veröffentlichungstag der Anmeldung: **18.02.2026**
(21) Anmeldenummer: 24194358.8
(22) Anmeldetag: 13.08.2024
(51) Int. Cl.: C08F 290/06, C09D 5/34, C08K 5/37, C08K 5/17

(54) **STYROLFREIES REAKTIVES SYSTEM**

(71) Anmelder: AKEMI chemisch technische Spezialfabrik GmbH, 90451 Nürnberg (DE)
(72) Erfinder: Pamer, Jonathan, 90471 Nürnberg (DE)
(74) Vertreter: Louis Pöhlau Lohrentz

(57) **Zusammenfassung**

Die Erfindung betrifft ein styrolfreies reaktives System, wobei das System zumindest eine Komponente I aufweist, die folgenden Reagenzien umfasst: ein Reagenz A, wobei Reagenz A ein Polymer, das aus der Gruppe, die aus Polyester(meth)acrylat, Polyurethan(meth)acrylat, Epoxy(meth)acrylat, Polyether(meth)acrylat, und Mischungen davon und Copolymeren davon und Blends davon besteht, ausgewählt ist, umfasst,; Reagenz B, wobei Reagenz B ein (Meth)acrylat-Monomer umfasst; Reagenz C, wobei Reagenz C einen thiolhaltigen Polymerisationsbeschleuniger umfasst; Reagenz D, wobei Reagenz D einen aminhaltigen Polymerisationsbeschleuniger umfasst; Reagenz E , wobei Reagenz E einen Füllstoff umfasst; und wobei Komponente I Talkum zu weniger als 3 Gew.-% umfasst.

## Beschreibung

Die Erfindung betrifft ein styrolfreies reaktives System.

Reaktive Systeme zum Ausfüllen und Kleben beispielsweise in der Verwendung als Gießharz, als Spachtelmasse und/oder als Reparatur-Kit, die Polyester umfassen, sind bekannt.

Die reaktiven Systeme weisen hierzu meist Polyester auf, die in Mischung mit ungesättigten Monomeren bereitgestellt werden. Die ungesättigten Monomere wirken hierbei als Lösemittel und Reaktivverdünner für die Polyester. Der bekannteste Reaktivverdünner für diese Art von System ist Styrol. Vorteilhaft an Styrol sind dessen geringe Kosten, gute mechanische Eigenschaften sowie eine gute Polymerisationskinetik. Styrol hat jedoch schädliche Auswirkungen auf Umwelt und die Anwendergesundheit. Daher wurden Grenzwerte für Styrol-Emissionen erlassen, so dass der Bedarf an alternativen styrolfreien reaktiven Systemen zunimmt.

Weiter ist bekannt, dass als mineralischer Füllstoff Talkum in reaktiven Systemen eingesetzt wird. So beschreibt EP 3 495 399 B1 eine styrolfreie und cobaltfreie Polymerzusammensetzung aus einem Harz, einem Reaktivverdünner, einem aminhaltigen Polymerisationsbeschleuniger und Talkum.

Talkum bietet bei der Verwendung als mineralischer Füllstoff den Vorteil, dass reaktive Systeme eine gute Haftung an Metall und eine geringe Fließfähigkeit aufweisen. Hierdurch ist Talkum besonders geeignet für Spachtelmassen, die beispielsweise in der Automobilindustrie eingesetzt werden. Soll das reaktive System eine gute Fließfähigkeit aufweisen, wie beispielsweise bei der Verwendung als Gießharz, so sind große Anteile an Talkum jedoch aufgrund der Verringerung der Fließfähigkeit nachteilig. Weiter ist Talkum im Vergleich zu anderen Füllstoffen, beispielsweise mineralischen Füllstoffen, hochpreisiger.

Es ist nun eine Aufgabe der Erfindung, ein verbessertes styrolfreies reaktives System bereitzustellen, dass eine verbesserte Trockenzeit und Zeit bis zur Schleifbarkeit aufweist. Insbesondere ist es eine Aufgabe, ein styrolfreies reaktives System als Gießharz, insbesondere für Risse in Estrichen und Böden, bereitzustellen.

Weiter wird die Aufgabe gelöst durch Bereitstellung eines styrolfreien reaktiven Systems, wobei das System zumindest eine Komponente I aufweist, die die folgenden Reagenzien umfasst:
- ein Reagenz A, wobei Reagenz A ein Polymer, das aus der Gruppe, die aus Polyester(meth)acrylat, Polyurethan(meth)acrylat, Epoxy(meth)acrylat, Polyether(meth)acrylat, und Mischungen davon und Copolymeren davon und Blends davon besteht, ausgewählt ist, umfasst,
- Reagenz B, wobei Reagenz B ein (Meth)acrylat-Monomer umfasst,
- Reagenz C, wobei Reagenz C einen thiolhaltigen Polymerisationsbeschleuniger umfasst,
- Reagenz D, wobei Reagenz D einen aminhaltigen Polymerisationsbeschleuniger umfasst,
- Reagenz E, wobei Reagenz E einen Füllstoff umfasst,
wobei Komponente I Talkum zu weniger als 3 Gew.-% umfasst.

Bevorzugte Ausführungsformen des erfindungsgemäßen Systems sind in den Ansprüchen 2 bis 15 angegeben.

Durch das vorliegende Verfahren wird es ermöglicht, ein styrolfreies reaktives System bereitzustellen, das ohne die Verwendung von Styrol als Reaktivverdünner auskommt und insbesondere eine verbesserte Trockenzeit und Zeit bis zur Schleifbarkeit aufweist.

Ein bekanntes Problem bei reaktiven Systemen mit aminhaltigen Polymerisationsbeschleunigern ist, dass eine Inhibierung von oberflächennahen Bereichen der Systeme mit dem in der Umgebungsluft enthaltenen Sauerstoff auftreten kann. Hierdurch können die reaktiven Systeme nicht vollständig in einer angestrebten Zeit, bevorzugt innerhalb einer Stunde, weiter bevorzugt innerhalb von 10 min bis 30 min, durchhärten. Durch die Sauerstoffinhibierung wird eine Oberfläche erhalten, die haptisch einen feuchten und klebrigen Eindruck aufweist. Zusätzlich sind Oberflächen, die nicht vollständig ausgehärtet sind, nicht schleifbar. Dies, da durch die Körnung eines Schleifpapiers die weichen Oberflächenbereiche abgetragen werden, die die Zwischenräume der Schleifpapierkörnung irreversibel ausfüllen und damit weiteren Abtrag vermeiden.

Im Vergleich hierzu weist das erfindungsgemäße System eine verbesserte Trocknung auf. Durch die Kombination des aminhaltigen Polymerisationsbeschleunigers mit einem thiolhaltigen Polymerisationsbeschleunigers wird vorstehendes Problem der Sauerstoffinhibierung vermieden und die Oberfläche weist in der angestrebten Zeit eine trockene und feste Oberfläche auf, wodurch gute Schleifbarkeit erhalten wird.

Ein weiterer Vorteil des erfindungsgemäßen Systems ist, dass es nur eine milde chemische Kennzeichnung aufweist, da insbesondere auf Styrol, Vinyltoluol, Kobalt und/oder auf Isocyanat verzichtet werden kann. Durch diesen Verzicht wird das Risiko für Anwender und Umwelt reduziert. Außerdem weisen Systeme mit vergleichbarer Verwendung für gewöhnlich eine niedrige Fließfähigkeit auf und werden daher in Dosen bereitgestellt. Das erfindungsgemäße System kann jedoch aufgrund einer hohen Fließfähigkeit anstatt in Dosen auch in Quetschflaschen bereitgestellt werden. Durch die Quetschflaschen wird die Handhabung verbessert, so dass das Risiko auf einen Kontakt des Systems mit der Haut eines Anwenders weiter reduziert wird. Ein weiterer Vorteil der hohen Fließfähigkeit ist außerdem, dass die Komponenten des erfindungsgemäßen Systems bereits durch händisches Schütteln miteinander homogenisiert werden können, was wiederum ein gleichmäßiges Aushärten ermöglicht.

Das erfindungsgemäße reaktive System weist ein Reagenz A auf, das von einer Komponente I umfasst wird. Hierbei umfasst das Reagenz A zumindest ein Polymer. Das Polymer von Reagenz A ist aus der Gruppe, die aus Epoxy(meth)acrylat, Polyester(meth)acrylat, Polyether(meth)acrylat, Polyurethan(meth)acrylat, und Mischungen davon und Copolymeren davon und Blends davon besteht, ausgewählt. Bei einer bevorzugten Ausführungsform ist das Polymer von Reagenz A ein Polyester(meth)acrylat.

Unter einer Verbindung, beispielsweise einem Polymer und/oder einem Monomer, umfassend zumindest eine (Meth)acrylat-Gruppe wird eine entsprechende Verbindung verstanden, die zumindest eine Methacrylat-Gruppe und/oder zumindest eine Acrylat-Gruppe aufweist.

Das Polymer von Reagenz A weist insbesondere zumindest eine ungesättigte Doppelbindung auf, die von einer endständigen (Meth)acrylat-Gruppe umfasst wird. So können Polyurethan(meth)acrylate Polymere sein, die ein Polyurethanrückgrat und zumindest eine endständige (Meth)acrylat-Gruppe mit einer ungesättigten Doppelbindung aufweisen. Polyurethan(meth)acrylate sind beispielsweise erhältlich durch Umsetzung von Polyisocyanaten mit Hydroxyalkyl(meth)acrylaten und optional Kettenverlängerungsmitteln wie Diolen, Polyolen, Diaminen, Polyaminen oder Dithiolen oder Polythiolen.

Polyester(meth)acrylate sind Polyester, die insbesondere zumindest eine endständige (Meth)acrylat-Gruppen mit einer ungesättigten Doppelbindung aufweisen.

Bei einer bevorzugten Ausführungsform ist es möglich, dass das Polymer von Reagenz A zumindest eine ungesättigte Doppelbindung aufweist, die nicht von einer endständigen (Meth)acrylat-Gruppe umfasst wird. Die ungesättigte Doppelbindung kann vom Rückgrat, beispielsweise vom Polyester, umfasst sein. Beispielsweise können ungesättigte Polyester aus Diolen und Dicarbonsäuren mit jeweils mindestens zwei Hydroxy-Gruppen oder mindestens zwei Carboxy-Gruppen, aufgebaut sein. Als Dicarbonsäure ist bevorzugt zumindest eine α,β-ungesättigte Dicarbonsäure enthalten. Die α,β-ungesättigte Dicarbonsäure kann beispielsweise Maleinsäure, Fumarsäure und/oder Maleinsäureanhydrid sein, wobei Maleinsäureanhydrid bevorzugt ist.

Es ist möglich, dass Komponente I das Reagenz A, bevorzugt das Polymer von Reagenz A, zu einem Anteil, der aus einem Bereich von 3 Gew.-% bis 50 Gew.-%, bevorzugt von 5 Gew.-% bis 40 Gew.-%, weiter bevorzugt von 10 Gew.-% bis 30 Gew.-%, ausgewählt ist, aufweist, bezogen auf das Gesamtgewicht der Komponente I. Das Gesamtgewicht addiert sich jeweils zu 100 Gew.-%.

Das erfindungsgemäße reaktive System weist ein Reagenz B, das von einer Komponente I umfasst wird, auf. Hierbei umfasst Reagenz B zumindest ein (Meth)acrylat-Monomer umfasst. Reagenz B wirkt vorzugsweise als Reaktivverdünner.

Unter Reaktivverdünner wird ein Bestandteil eines reaktiven Systems verstanden, durch den die Viskosität des reaktiven Systems reduziert wird und der Teil der Härtung des reaktiven Systems ist. Der Reaktionsverdünner wird bevorzugt zumindest teilweise von dem gehärteten System umfasst.

Unter (Meth)acrylat-Monomeren werden Monomere verstanden, die zumindest eine Methacrylat-Gruppe und/oder zumindest eine Acrylat-Gruppe aufweisen.

Es ist möglich, dass das (Meth)acrylat-Monomer von Reagenz B aus der Gruppe, die aus Methyl(meth)acrylat, Ethyl(meth)acrylat, n-Butyl(meth)acrylat, tert-Butyl(meth)acrylat, Isobutyl(meth)acrylat, sec-Butyl(meth)acrylat, Hydroxyethyl(meth)acrylat, Propyl(meth)acrylat, Hydroxypropyl(meth)acrylat, Benzyl(meth)acrylat, Tripropylenglycoldi(meth)acrylat, 1,6-Hexandiol(meth)acrylat, Dipropylenglycoldi(meth)acrylat, Pentaerythritoltetracrylat (PPTTA), Trimethylolpropanethoxytriacrylat (TMPEOTA), Glyceryltriacrylatpropoxylat (GPTA), Isobornyl(meth)acrylat, Phenoxyethyl(meth)acrylat, Hexyl(meth)acrylat, Cyclohexyl(meth)acrylat, 2-Butoxyethyl(meth)acrylat, Ethylhexyl(meth)acrylat, Isodecyl(meth)acrylat, 1,3-Butandioldi(meth)acrylat, und Mischungen davon besteht, ausgewählt ist. Bei einer bevorzugten Ausführungsform ist das (Meth)acrylat-Monomer von Reagenz B Butyl(meth)acrylat, insbesondere n-Butyl(meth)acrylat, tert-Butyl(meth)acrylat, sec-Butyl(meth)acrylat und/oder Isobutyl(meth)acrylat.

Bei einer Ausführungsform ist es möglich, dass das (Meth)acrylat-Monomer von Reagenz B ein Alkyl(meth)acrylat und/oder Aryl(meth)acrylat ist oder umfasst, wobei das Alkyl oder Aryl Kohlenstoffatome aufweist, deren Anzahl aus einem Bereich von 1 bis 10, bevorzugt von 1 bis 8, weiter bevorzugt von 1 bis 6, noch weiter bevorzugt von 1 bis 4, ausgewählt ist.

Ein styrolfreies reaktives System gemäß der vorliegenden Erfindung weist ein Reagenz B, insbesondere eine Komponente I, auf, dass kein Styrol, kein Vinyltoluol und/oder Derivate davon aufweist. Gemäß einer bevorzugten Ausführungsform ist das styrolfreie reaktive System gemäß der vorliegenden Erfindung zugleich ein cobaltfreies System.

Es ist möglich, dass Komponente I das Reagenz B, bevorzugt das (Meth)acrylat-Monomer von Reagenz B, zu einem Anteil, der aus einem Bereich von 3 Gew.-% bis 30 Gew.-%, bevorzugt von 5 Gew.-% bis 25 Gew.-%, noch weiter bevorzugt von 7 Gew.-% bis 20 Gew.-%, ausgewählt ist, aufweist, bezogen auf das Gesamtgewicht der Komponente I von 100 Gew.-%. Das Gesamtgewicht addiert sich jeweils zu 100 Gew.-%.

Das erfindungsgemäße reaktive System weist ein Reagenz C, das von der Komponente I umfasst wird, auf. Hierbei umfasst Reagenz C zumindest einen thiolhaltigen Polymerisationsbeschleuniger.

Der thiolhaltige Polymerisationsbeschleuniger führt zu dem vorteilhaften Effekt, dass die Trockenzeit des Systems und die Zeit bis eine ausreichende Schleifbarkeit erreicht wird signifikant verkürzt wird bzw. erst ermöglicht wird.

Die Erfinder vermuten, dass der vorteilhafte Effekt verursacht wird, in dem das thiolhaltige Molekül eine Sauerstoffinhibierung der oberflächennahen Bereiche verhindert. Hierdurch wird eine vollständige Härtung der oberflächennahen Bereiche gefördert. Das thiolhaltige Molekül fungiert vorzugsweise als Sikkativ. Das thiolhaltige Molekül greift insbesondere in die radikalische Polymerisation ein und verhindert einen Kettenabbruch, der durch Sauerstoffradikale verursacht wird, indem es über eine ungesättigte Funktionalität mit den Sauerstoffradikalen rekombiniert. Es wird eine unzureichende Polymerisierung von Prepolymeren, beispielsweise von Reagenz B, verhindert. Die unzureichende Polymerisation kann ansonsten zu einer klebrigen und nicht schleifbaren Oberfläche führen.

Es ist möglich, dass Komponente I Reagenz C, bevorzugt der thiolhaltige Beschleuniger von Reagenz C zu einem Anteil, der aus einem Bereich von 0,01 Gew.-% bis 10 Gew.-%, bevorzugt von 0,1 Gew.-% bis 5 Gew.-%, weiter bevorzugt von 0,2 Gew.-% bis 3 Gew.-%, ausgewählt ist, aufweist, bezogen auf das Gesamtgewicht der Komponente I.

Vorzugsweise umfasst der thiolhaltige Polymerisationsbeschleuniger von Reagenz C wenigstens zwei thiolhaltige Gruppen.

Es ist möglich, dass der thiolhaltige Polymerisationsbeschleuniger von Reagenz C aus der Gruppe, die aus 3-Mercaptopropionaten, 2-Mercaptoacetaten, Thioglykolaten, Alkyldithiolen und Kombinationen davon und Derivaten davon besteht, ausgewählt ist.

Vorzugsweise ist der thiolhaltige Polymerisationsbeschleuniger von Reagenz C aus der Gruppe, die aus Trimethylolpropantrimercaptopropionat (TMPMP), Glykoldimercaptopropionat (GDMP), Pentaerythritoltetra(3-mercaptopropionat) (PETMP), Tris[2-(3-mercaptopropionyloxy)ethyl]isocyanurat (TEMPIC), und Mischungen davon und Derivaten davon besteht, ausgewählt. Bei einer bevorzugten Ausführungsform ist der thiolhaltige Polymerisationsbeschleuniger von Reagenz C TMPMP.

Das erfindungsgemäße reaktive System weist ein Reagenz D, das von der Komponente I umfasst wird, auf. Hierbei umfasst Reagenz D zumindest einen aminhaltigen Polymerisationsbeschleuniger.

Der aminhaltige Polymerisationsbeschleuniger aktiviert insbesondere einen Härter, insbesondere den Härter der Komponente II. Der aminhaltige Polymerisationsbeschleuniger umfasst zumindest ein Amin, vorzugsweises tertiäres Amin, mit einem freien Elektronenpaar.

Es ist möglich, dass der aminhaltige Polymerisationsbeschleuniger von Reagenz D aus der Gruppe, die aus Anilin, Xylidin, bevorzugt 2,3- Xylidin, 2,4-Xylidin, 2,5-Xylidin, 2,6-Xylidin, 3,4-Xylidin, und/oder 3,5-Xylidin, p-Toluidin, m-Toluidin, und Mischungen davon, und Derivaten davon besteht, ausgewählt ist.

Vorzugsweise ist der aminhaltige Polymerisationsbeschleuniger von Reagenz D aus der Gruppe, die aus N,N,-Dimethylanilin, N,N-Diethylanilin, N,N-Dimethyl-p-toluidin, N,N-Bis(2-hydroxyethyl)aniline, N,N-Bis(2-hydroxyethyl)-p-toluidin, N,N-Bis(2-hydroxypropyl)anilin, N,N-Bis(2-hydroxypropyl)-p-toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan, und Mischungen davon, und Derivaten davon besteht, ausgewählt. Bei einer bevorzugten Ausführungsform ist der aminhaltige Polymerisationsbeschleuniger von Reagenz D N,N,-Dimethylanilin, N,N-Diethylanilin und/oder N,N-Bis(2-hydroxyethyl)-p-toluidin.

Es ist möglich, dass Komponente I das Reagenz D, bevorzugt der aminhaltige Polymerisationsbeschleuniger von Reagenz D, zu einem Anteil, der aus einem Bereich von 0,01 Gew.-% bis 5 Gew.-%, bevorzugt von 0,1 Gew.-% bis 3 Gew.-%, weiter bevorzugt von 0,2 Gew.-% bis 2 Gew.-%, ausgewählt ist, aufweist, bezogen auf das Gesamtgewicht der Komponente I von 100 Gew.-%.

Das erfindungsgemäße reaktive System weist ein Reagenz E, das von der Komponente I umfasst wird, auf. Hierbei umfasst Reagenz E zumindest einen Füllstoff. Bei einer bevorzugten Ausführungsform ist Reagenz E ein mineralischer Füllstoff.

Unter Füllstoffen werden Bestandteile, die einen Gewichtsanteil von über 5 Gew.-%, bevorzugt von über 30 Gew.-%, bezogen auf das Gesamtgewicht der Komponente I aufweisen und ungelöst in der Komponente I vorliegen, verstanden und bevorzugt die mechanischen Eigenschaften des Systems beeinflussen.

Es ist möglich, dass der Füllstoff von Reagenz E aus der Gruppe, die aus Bariumsulfat (BaSO₄), Aluminiumhydroxid (Al(OH)₃), Kaolin (Al₂O₃/SiO₂), CaCOs, SiO₂, Kieselsäure/Kaolinit (SiO₂/Al₂[(OH)₄Si₂O₅)]), Glaskugeln, Glasfasern, Polymerkugeln, Polymerfasern, Cellulose, Holzfasern, Ruß und bevorzugt BaSO₄, Al(OH)₃, CaCOs, weiter bevorzugt BaSO₄, CaCOs, und Mischungen davon besteht, ausgewählt ist.

Bei einer bevorzugten Ausführungsform ist der Füllstoff von Reagenz E aus der Gruppe, die aus Bariumsulfat (BaSO₄), Aluminiumhydroxid (Al(OH)₃), Kaolin (Al₂O₃/SiO₂), CaCO₃, SiO₂, Kieselsäure/Kaolinit (SiO₂/Al₂[(OH)₄Si₂O₅)]), bevorzugt BaSO₄, Al(OH)₃, CaCOs, weiter bevorzugt BaSO₄, CaCOs, und Mischungen davon besteht, ausgewählt ist. Bei einer besonders bevorzugten Ausführungsform ist der Füllstoff CaCO₃.

Überraschenderweise hat sich gezeigt, dass Systeme, die insbesondere BaSO₄, Al(OH)₃, CaCOs, enthalten, gute Fließfähigkeiten bei geringen Trockenzeiten aufweisen, insbesondere im Vergleich zu Systemen, die das gleiche Volumen an Talkum enthalten. Dieser vorteilhafte Effekt ist insbesondere bei CaCO₃ ausgeprägt.

Komponente I, bevorzugt der Füllstoff von Reagenz E, umfasst Talkum zu weniger als 3 Gew.-%, bevorzugt zu weniger als 1 Gew.-%, bezogen auf das Gesamtgewicht der Komponente I. Bei einer bevorzugten Ausführungsform weist Komponente I, bevorzugt der Füllstoff von Reagenz E, kein Talkum auf.

Talkum bietet bei der Verwendung als Füllstoff, beispielsweise als mineralischer Füllstoff, den Vorteil, dass reaktive Systeme eine gute Haftung an Metall und eine geringe Fließfähigkeit aufweisen. Hierdurch ist Talkum besonders geeignet für Spachtelmassen, die beispielsweise in der Automobilindustrie eingesetzt werden.

Im erfindungsgemäßen System sind große Anteile an Talkum aufgrund der Verringerung der Fließfähigkeit nachteilig. Außerdem wird überraschenderweise die Lagerstabilität der Komponente I verschlechtert. Es wird davon ausgegangen, dass im Sediment aus Talkum eine Polymerisation der weiteren Bestandteile initiiert wird, wodurch auch eine Redispergierung des Sediments verhindert wird. Die oben genannten Füllstoffe, insbesondere die mineralischen Füllstoffe BaSO₄, Al(OH)₃ und/oder CaCOs, bieten im Vergleich zu Talkum überaschenderweise den Vorteil, dass Systeme, die diese insbesondere mineralischen Füllstoffe, bei gleichen Volumen umfassen, eine bessere Fließfähigkeit und Trockenzeit aufweisen. Weiter können die oben genannten Füllstoffe, insbesondere die mineralischen Füllstoffe BaSO₄, Al(OH)₃ und/oder CaCOs, in Bezug auf das Verhältnis von Preis pro Volumen kostengünstiger bereitgestellt werden.

Es hat sich als vorteilhaft erwiesen, wenn Reagenz E, bevorzugt der Füllstoff, keine Beschichtung aufweist. Es hat sich gezeigt, dass eine Beschichtung, beispielsweise aus Stearinsäure, die Polarität von Reagenz E signifikant reduzieren kann. Durch unpolare Füllstoffe kann das Benetzungsverhalten von anderen Bestandteilen des Systems am Reagenz E negativ beeinflusst werden.

Vorzugsweise weist der Füllstoff von Reagenz E eine Form, die aus der Gruppe, die aus Kugel, Ellipsoid, Polyeder, Faser, Stäbchen, Plättchen, und Fragmenten davon, und Kombinationen davon besteht, ausgewählt ist, auf. Weiter bevorzugt weist der Füllstoff von Reagenz E eine Form, die aus der Gruppe, die aus Kugel, Ellipsoid, Polyeder, und Fragmenten davon, und Kombinationen davon besteht, ausgewählt ist, auf.

Es ist möglich, dass der Füllstoff von Reagenz E einen mittleren volumenbezogenen Partikeldurchmesser, d_{50,3}, der aus einem Bereich von 0,1 µm bis 40 µm, bevorzugt von 0,6 µm bis 15 µm, weiter bevorzugt von 1,7 µm bis 12 µm, noch weiter bevorzugt von 1,8 µm bis 7,5 µm, ausgewählt ist, aufweist.

Bei einer bevorzugten Ausführungsform kann der mittlere volumenbezogene Kugeldurchmesser, d_{50, 3}, kann beispielsweise durch Laserbeugung, beispielsweise gemäß dem in der ISO 13320:2020-01 ("Particle size analysis - Laser diffraction methods", Deutscher Titel: "Partikelgrößenanalyse - Partikelmessung durch Laserlichtbeugung", Ausgabedatum: 2020-01) beschriebenen Vorgehensweise bestimmt werden.

Vorzugsweise weist der Füllstoff von Reagenz E eine monomodale oder bimodale volumenbezogene Partikelgrößenverteilung auf.

Es ist möglich, dass der Füllstoff von Reagenz E eine Dichte ρ_{E}, die aus einem Bereich von 1 g/cm³ bis 4,5 g/cm³, bevorzugt von 2 g/cm³ bis 3 g/cm³, weiter bevorzugt von 2,4 g/cm³ bis 2,75 g/cm³, ausgewählt ist, aufweist. Die Dichte des Füllstoffs wird insbesondere gemessen nach der in SN EN ISO 787-10:1996 ("General methods of test for pigments and extenders - Part 10: Determination of density; pyknometer method (ISO 787-10:1993)", deutscher Titel: "Allgemeine Prüfverfahren für Pigmente und Füllstoffe - Teil 10: Bestimmung der Dichte; Pyknometerverfahren (ISO 787-10:1993)", Ausgabedatum: 1996) beschriebenen Methode.

Es ist möglich, dass Komponente I das Reagenz E, bevorzugt der Füllstoff von Reagenz E, zu einem Anteil, der aus einem Bereich von 2 Gew.-% bis 80 Gew.-%, bevorzugt von 30 Gew.-% bis 70 Gew.-%, weiter bevorzugt von 40 Gew.-% bis 65 Gew.-%, ausgewählt ist, aufweist, bezogen auf das Gesamtgewicht der Komponente I.

Es ist möglich, dass das erfindungsgemäße reaktive System ein Reagenz F, das von einer Komponente I umfasst wird, aufweist. Hierbei wirkt Reagenz F als Polymerisationsinhibitor, wodurch die Lagerstabilität insbesondere von Komponente I erhöht wird.

Es ist möglich, dass Reagenz F aus der Gruppe, die aus Phenothiazin, Phenol, 2,6-Di-tert-butyl-4-methylphenol, Hydrochinon (HQ), Toluhydrochinon (THQ), Bisphenol A (BPA), Triphenylantimon, Naphthochinon (NQ), p-Benzochinon (p-BQ), Butylhydroxytoluol (BHT), Hydrochinonmonomethylether (HQMME), 4-Ethoxyphenol, 4-Propoxyphenol und Propylisomeren davon, Mono-tert-butylhydrochinon (MTBHQ), Di-tert-butylhydrochinon (DTBHQ), tert-Butylbrenzcatechin (TBC), 1,2-Dihydroxybenzol, 2,5-Dichlorhydrochinon, 2-Acetylhydrochinon, 1,4-Dimercaptobenzol, 2,3,5-Trimethylhydrochinon, 2-Aminophenol, 2-N,N-Dimethylaminophenol, Brenzcatechin, 2,3-Dihydroxyacetophenon, Pyrogallol, 2-Methylthiophenol und Mischungen davon besteht, ausgewählt ist.

Alternativ oder zusätzlich kann Reagenz F aus der Gruppe, die aus N,N-Di-tert-butylnitroxid, N,N-Di-tert-amylnitroxid, N-tert-Butyl-2-methyl-1-phenyl-propylnitroxid, N-tert-Butyl-1-diethylphosphono-2,2-dimethylpropyl-nitroxid, 2,2,6,6-Tetramethyl-piperidinyloxy, 4-Amino-2,2,6,6-tetramethyl-piperidinyloxy, 4-Hydroxy-2,2,6,6-tetramethyl-piperidinyloxy, 4-Oxo-2,2,6,6-tetramethyl-piperidinyloxy, 4-Dimethylamino-2,2,6,6-tetramethyl-piperidinyloxy, 4-Ethanoyloxy-2,2,6,6-tetramethyl-piperidinyloxy, 2,2,5,5-Tetramethylpyrrolidinyloxy, 3-Amino-2,2,5,5-tetramethylpyrrolidinyloxy, 2,2,4,4-Tetramethyl-1-oxa-3-azacyclopentyl-3-oxy, 2,2,4,4-Tetramethyl-1-oxa-3-pyrrolinyl-1-oxy-3-carbonsäure, 2,2,3,3,5,5,6,6-Octamethyl-1,4-diazacyclohexyl-1,4-dioxy, 4-Brom-2,2,6,6-tetramethyl-piperidinyloxy, 4-Chlor-2,2,6,6-tetramethyl-piperidinyloxy, 4-lod-2,2,6,6-tetramethyl-piperidinyloxy, 4-Fluor-2,2,6,6-tetramethyl-piperidinyloxy, 4-Cyano-2,2,6,6-tetramethyl-piperidinyloxy, 4-Carboxy-2,2,6,6-tetramethyl-piperidinyloxy, 4-Carbomethoxy-2,2,6,6-tetramethyl-1-piperidinyloxy, 4-Carbethoxy-2,2,6,6-tetramethyl-piperidinyloxy, 4-Cyano-4-hydroxy-2,2,6,6-tetramethyl-piperidinyloxy, 4-Methyl-2,2,6,6-tetramethyl-1-piperidinyloxy, 4-Carbethoxy-4-hydroxy-2,2,6,6-tetramethyl-piperidinyloxy, 4-Hydroxy-4-(1-hydroxypropyl)-2,2,6,6-tetramethyl-piperidinyloxy, 4-Methyl-2,2,6,6-tetranlethyl-1,2,5,6-tetrahydropyridinyloxyl, und Mischungen davon besteht, ausgewählt sein.

Es ist möglich, dass Reagenz F einen Anteil bezogen auf das Gesamtgewicht der Komponente I, der aus einem Bereich von mehr als 0 Gew.-% bis 5 Gew.-%, bevorzugt von 0,2 Gew.-% bis 4 Gew.-%, weiter bevorzugt von 0,7 Gew.-% bis 3 Gew.-%, ausgewählt ist, aufweist.

Es ist möglich, dass das erfindungsgemäße reaktive System ein Reagenz G, das von einer Komponente I umfasst wird, aufweist. Hierbei wirkt Reagenz G vorzugsweise als Rheologieadditiv, insbesondere als Thixotropiermittel. Hierdurch kann bevorzugt die Fließfähigkeit gezielt eingestellt werden, ohne dass andere Eigenschaften, wie beispielsweise die Lagerstabilität des Systems, beeinflusst werden.

Es ist möglich, dass Reagenz G aus der Gruppe, die aus Kieselsäure, bevorzugt pyrogene Kieselsäure, Kieselgur und/oder Kieselglas, Sepiolith, Bentonit Alkyl- und Methylcellulosen, Rizinusölderivate, bevorzugt hydriertes Rizinusöl, und Mischungen davon besteht, ausgewählt ist. Bei einer bevorzugten Ausführungsform ist Reagenz G Kieselsäure, bevorzugt pyrogene Kieselsäure.

Überraschenderweise hat sich gezeigt, dass Systeme, die insbesondere Kieselsäure, bevorzugt pyrogene Kieselsäure, enthalten, gute Stabilität gegenüber Sedimentation und damit auch eine gute Lagerstabilität aufweisen, ohne dass die Fließfähigkeit wesentlich reduziert wird.

Es ist möglich, dass Reagenz G einen Anteil, bezogen auf das Gesamtgewicht der Komponente I, der aus einem Bereich von mehr als 0 Gew.-%, bis 5 Gew.-%, bevorzugt von 0,2 Gew.-% bis 4 Gew.-%, weiter bevorzugt von 0,7 Gew.-% bis 3 Gew.-%, noch weiter bevorzugt von 1 Gew.-% bis 2,7 Gew.-%, ausgewählt ist, aufweist.

Es ist möglich, dass das System auch Additive, insbesondere weitere Additive, die aus der Gruppe, die aus Antioxidationsmittel, Antistatika, Verlaufsadditiv, Entschäumer, Hautverhinderungsmittel, Lichtschutzmittel, Mattierungsmittel, Flammschutzmittel, Korrosionsschutzmittel, Pigmente, Farbstoffe, und Mischungen davon besteht, aufweist.

Unter Additiven werden Bestandteile verstanden, die jeweils einen Gewichtsanteil von unter 5 Gew.-%, bevorzugt von unter 3 Gew.-%, bezogen auf das Gesamtgewicht der Komponente I aufweisen und insbesondere nicht von den vorstehenden Reagenzien umfasst sind. Additive können in der Komponente I gelöst oder ungelöst vorliegen. Durch die Zugabe von Additiven können gewünschte Eigenschaften des Systems, bevorzugt der Komponente I, eingestellt werden, ohne dass die mechanischen Eigenschaften des insbesondere gehärteten Systems negativ beeinflusst werden.

Vorzugsweise weist Komponente I Additive, die aus einem Bereich von 0,1 Gew.-% bis 5 Gew.-%, bevorzugt von 0,2 Gew.-% bis 3 Gew.-%, weiter bevorzugt von 0,5 Gew.-% bis 1,5 Gew.-%, ausgewählt sind, auf.

Unter Pigmenten werden partikelförmige in einem spezifischen Medium unlösliche, anorganische oder organische, bunte oder unbunte Farbmittel verstanden. Erfindungsgemäß ist das spezifische Medium zum Definieren der Löslichkeit bevorzugt Komponente I, weiter bevorzugt Reagenz A und/oder Reagenz B.

Als "unlöslich" wird eine Löslichkeit in 1000 g eines spezifischen Mediums bei 25°C von weniger als 1 g, bevorzugt weniger als 0,5 g, weiter bevorzugt weniger als 0,25 g, noch weiter bevorzugt weniger als 0,1 g, ferner noch weiter bevorzugt unter 0,05 g, verstanden.

Pigmente umfassen insbesondere Absorptionspigmente und/oder Effektpigmente.

Unter Effektpigmenten werden Pigmente verstanden, die einen plättchenförmigen Aufbau aufweisen und einem mit ihnen dekorierten Objekt einen speziellen insbesondere blickwinkelabhängigen Farbeffekt verleihen. Beispielsweise sind die Effektpigmente aus der Gruppe, die reine Metalleffektpigmente, bevorzugt aus Aluminium, Eisen und/oder Kupfer, Interferenzpigmente, bevorzugt titanoxidbeschichteter Glimmer, chromoxidbeschichteter Glimmer, eisenoxidbeschichteter Glimmer, mischoxidbeschichteter Glimmer, metalloxidbeschichtetes Aluminium, und Flüssigkristallpigmente und/oder Mischungen davon besteht, ausgewählt.

Absorptionspigmenten sind bevorzugt organische oder anorganische Absorptionspigmente. Organische Absorptionspigmente sind beispielsweise aus der Gruppe, die aus Azopigmenten, Phthalocyaninpigmenten, Chinacridonpigmenten, Pyrrolopyrrolpigmenten, und Mischungen davon besteht, ausgewählt. Anorganische Absorptionspigmente sind beispielsweise aus der Gruppe, die aus Eisenoxid (schwarz, rot und/oder gelb), Titandioxid, Zinkoxid, Ceroxid, Zirkonoxid, Ruß, und Mischungen davon besteht, ausgewählt.

Unter Farbstoffen werden in einem spezifischen Medium, insbesondere Komponente I, lösliche, Farbmittel verstanden.

Als "löslich" wird eine Löslichkeit in 1000 g eines spezifischen Mediums bei 25°C von mehr als 1 g, bevorzugt mehr als 1,5 g, verstanden.

Die Farbstoffe sind bevorzugt aus der Gruppe, die aus Azofarbstoffen, Azinfarbstoffen, Anthrachinonfarbstoffen, Acridinfarbstoffen, Cyaninfarbstoffen, Oxazinfarbstoffen, Polymethinfarbstoffen, Thiazinfarbstoffen, Triarylmethanfarbstoffen, und Kombinationen davon besteht, ausgewählt. Farbstoffe. Alternativ und/oder zusätzlich können die Farbstoffe aus der Gruppe, die aus ionischen Farbstoffen, bevorzugt basischen oder kationischen Farbstoffen, Beizenfarbstoffe, Direktfarbstoffen, Dispersionsfarbstoffen, Entwicklungsfarbstoffen, Küpenfarbstoffen, Metallkomplexfarbstoffen, Reaktivfarbstoffen, Schwefelfarbstoffen, Kupplungsfarbstoffen, chromophoren Farbstoffen, substantiven Farbstoffen, und Kombinationen davon besteht, ausgewählt sein.

Es ist möglich, dass die Komponente I die folgenden Reagenzien umfasst:
- ein Reagenz A, wobei Reagenz A ein Polymer umfasst,
- Reagenz B, wobei Reagenz B ein (Meth)acrylat-Monomer umfasst,
- Reagenz C, wobei Reagenz C einen thiolhaltigen Polymerisationsbeschleuniger umfasst,
- Reagenz D, wobei Reagenz D einen aminhaltigen Polymerisationsbeschleuniger umfasst,
- Reagenz E, wobei Reagenz E einen Füllstoff umfasst,
- Optional Reagenz F, wobei Reagenz F als Polymerisationsinhibitor wirkt,
- Optional Reagenz G, wobei Reagenz G als Rheologieadditiv wirkt,
- Optional weitere Additive.

Es ist möglich, dass Komponente I einen oder mehrere der folgenden Anteile aufweist, bezogen auf das Gesamtgewicht der Komponente I, wobei das Gesamtgewicht sich jeweils zu 100 Gew.-% addiert:

| | |
|---|---|
| - Reagenz A: | 3 Gew.-% bis 50 Gew.-%, bevorzugt 5 Gew.-% bis 40 Gew.-%, weiter bevorzugt 10 Gew.-% bis 30 Gew.-%, |
| - Reagenz B: | 3 Gew.-% bis 30 Gew.-%, |
| - Reagenz C: | bevorzugt 5 Gew.-% bis 25 Gew.-%, weiter bevorzugt 7 Gew.-% bis 20 Gew.-%, 0,01 Gew.-% bis 10 Gew.-%, bevorzugt 0,1 Gew.-% bis 5 Gew.-%, |
| - Reagenz D: | weiter bevorzugt 0,2 Gew.-% bis 3 Gew.-%, 0,01 Gew.-% bis 5 Gew.-%, bevorzugt 0,1 Gew.-% bis 3 Gew.-%, weiter bevorzugt 0,2 Gew.-% bis 2 Gew.-%, |
| - Reagenz E: | 2 Gew.-% bis 80 Gew.-%, bevorzugt 30 Gew.-% bis 70 Gew.-%, weiter bevorzugt 40 Gew.-% bis 65 Gew.-%, |
| - Optional Reagenz F: | mehr als 0 Gew.-% bis 5 Gew.-%, bevorzugt 0,2 Gew.-% bis 4 Gew.-%, weiter bevorzugt 0,7 Gew.-% bis 3 Gew.-%, |
| - Optional Reagenz G: | mehr als 0 Gew.-% bis 5 Gew.-%, bevorzugt 0,2 Gew.-% bis 4 Gew.-%, weiter bevorzugt 0,7 Gew.-% bis 3 Gew.-%, |
| - Optional Additive: | 0,1 Gew.-% bis 5 Gew.-%, bevorzugt 0,2 Gew.-% bis 3 Gew.-%, weiter bevorzugt 0,5 Gew.-% bis 1,5 Gew.-% |

Es ist möglich, dass das reaktive System eine Komponente II aufweist, wobei Komponente I und Komponente II räumlich voneinander getrennt bereitgestellt sind. Insbesondere werden Komponente I und Komponente II vor der Verwendung vermischt, wodurch die Härtung des reaktiven Systems initiiert wird.

Es ist erfindungsgemäß bevorzugt, dass Komponente I und/oder Komponente II, insbesondere das System, kein Kobalt, und/oder kein Isocyanat aufweist. Hierdurch wird das Risiko für die Gesundheit des Anwenders und für die Umwelt reduziert.

Es ist möglich, dass Komponente II zumindest einen Härter aufweist. Der Härter weist bevorzugt zumindest eine Peroxy-Gruppe und/oder zumindest eine AzoGruppe auf.

Ein Reagenz mit einer Peroxy-Gruppe kann aus der Gruppe, die aus peroxidischem Salz, Wasserstoffperoxid, Hydroperoxid, organischen Peroxiden, und Mischungen davon besteht, ausgewählt sein.

Peroxidische Salze sind bevorzugt aus der Gruppe, die aus Peroxodisulfaten, Peroxiden, Perboraten, Hydrogenmonopersulfaten, Peroxycarbonaten, und Mischungen davon besteht, ausgewählt. Die Gegenionen der peroxidischen Salze sind bevorzugt ausgewählt aus der Gruppe, die aus Ammonium, Natrium, Kalium, Magnesium, und Mischungen davon besteht.

Bei der Verwendung von Wasserstoffperoxid, wird dieser bevorzugt in wässriger Lösung mit einer Konzentration aus einem Bereich von 10 Gew.-% bis 50 Gew.-% bereitgestellt.

Hydroperoxide sind bevorzugt aus der Gruppe, die aus tert-Butylhydroperoxid, tert-Amylhydroperoxid, Cumylhydroperoxid, Peressigsäure, Perbenzoesäure, Monoperphthalsäure, m-Chlorperbenzoesäure und Mischungen davon besteht, ausgewählt.

Organische Peroxide sind bevorzugt aus der Gruppe, die aus Ketoperoxiden, Dialkylperoxiden, Diacylperoxiden, Acyl-Alkylperoxiden, Peranyhdriden, Percarbonaten, Perestern, und Mischungen davon besteht, ausgewählt.

Bei einer bevorzugten Ausführungsform sind organische Peroxide aus der Gruppe, die aus Dibenzoylperoxid, Diacetylperoxid, Di-tert-butylperoxid, Dicumylperoxid, Diethylperoxid, Acyl-Alkylperoxide, tert-Butylperbenzoat, Acetonperoxid, Butanonperoxid, 1,1'-Peroxybis-cyclohexanol, 1,2,4-Trioxolan, 9,10-Dihydro-9,10-epidioxidoanthracen, und Mischungen davon besteht, ausgewählt. Bei einer besonders bevorzugten Ausführungsform ist der Härter Diacylperoxid.

Bevorzugt weist die Komponente II den Härter bezogen auf das Gesamtgewicht der Komponente II zu einem Anteil, der aus einem Bereich in einem Bereich von 5 Gew.-% bis 80 Gew.-%, bevorzugt von 30 Gew.-% bis 60 Gew.-%, weiter bevorzugt von 40 Gew.-% bis 55 Gew.-%, jeweils bezogen auf das Gesamtgewicht von Komponente II, ausgewählt ist, auf.

Es ist möglich, dass Komponente II ein Stabilisierungsmittel aufweist, um die Zersetzung des Härters zu unterdrücken. Bevorzugt weist die Komponente II das Stabilisierungsmittel bezogen auf das Gesamtgewicht der Komponente II zu einem Anteil, der aus einem Bereich von 1 Gew.-% bis 20 Gew.-%, bevorzugt von 5 Gew.-% bis 10 Gew.-%, jeweils bezogen auf das Gesamtgewicht von Komponente II, ausgewählt ist, auf.

Es ist möglich, dass Komponente II einen Weichmacher aufweist, um vorzugsweise die Weichheit und Flexibilität des gehärteten Systems zu erhöhen. Bevorzugt weist die Komponente II den Weichmacher bezogen auf das Gesamtgewicht der Komponente II zu einem Anteil, der aus einem von 5 Gew.-% bis 60 Gew.-%, bevorzugt von 15 Gew.-% bis 45 Gew.-%, weiter bevorzugt von 25 Gew.-% bis 40 Gew.-%, jeweils bezogen auf das Gesamtgewicht von Komponente II, ausgewählt ist, auf. Der Weichmacher umfasst bevorzugt Phthalate.

Es ist möglich, dass Komponente II ein Lösemittel, bevorzugt Wasser, aufweist, wobei der Anteil des Lösemittels, bevorzugt des Wassers, aus einem Bereich von 5 Gew.-% bis 60 Gew.-%, bevorzugt von 15 Gew.-% bis 45 Gew.-%, weiter bevorzugt von 25 Gew.-% bis 40 Gew.-%, jeweils bezogen auf das Gesamtgewicht von Komponente II, ausgewählt ist.

Bei einer besonders bevorzugten Ausführungsform weist Komponente II als Härter Diacylperoxid auf, wobei der Anteil des Härters an Komponente II aus einem Bereich von 5 Gew.-% bis 30 Gew.-%, bevorzugt von 10 Gew.-% bis 25 Gew.-%, weiter bevorzugt von 12 Gew.-% bis 17 Gew.-%, ausgewählt ist, wobei Komponente II das Stabilisierungsmittel zu einem Anteil, der aus einem Bereich von 1 Gew.-% bis 20 Gew.-%, bevorzugt von 5 Gew.-% bis 10 Gew.-%, ausgewählt ist, aufweist, wobei Komponente II das Lösemittel, bevorzugt Wasser, zu einem Anteil, der aus einem Bereich von 5 Gew.-% bis 60 Gew.-%, bevorzugt von 15 Gew.-% bis 45 Gew.-%, weiter bevorzugt von 25 Gew.-% bis 40 Gew.-%, ausgewählt ist, aufweist, und wobei Komponente II den Weichmacher, vorzugsweise umfassend Phtalate, aus einem Bereich von 5 Gew.-% bis 60 Gew.-%, bevorzugt von 15 Gew.-% bis 45 Gew.-%, weiter bevorzugt von 25 Gew.-% bis 40 Gew.-%, ausgewählt ist, aufweist, wobei die Anteile jeweils auf das Gesamtgewicht von Komponente II bezogen sind. Es ist möglich, dass Komponente II weitere Bestandteile, insbesondere Additive, umfasst.

Es ist möglich, dass für einen Volumenteil an Komponente I n Volumenteile Komponente II bereitgestellt werden, wobei n aus einem Bereich von 0,001 bis 0,2, bevorzugt von 0,01 bis 0,1, weiter bevorzugt von 0,03 bis 0,08, ausgewählt ist.

Vergleichbare bekannte Systeme, beispielsweise Gießharze aus dem Stand der Technik, werden üblicherweise mit zwei zur Hälfte befüllten 1 Liter-Gebinden bereitgestellt, wobei sie vor der Verwendung in eines der Gebinde überführt und vermischt werden. Im Gegensatz hierzu bietet das erfindungsgemäße System den Vorteil, insbesondere gegenüber Gießharzen aus dem Stand der Technik, dass die Gebindegrößen geringere Volumina aufweisen können.

Es ist möglich, dass das System, bevorzugt Komponente I, einen Fließpunkt *τ*_{f}, der aus einem Bereich von 0,5 Pa bis 3,5 Pa, bevorzugt von 0,7 Pa bis 3 Pa, weiter bevorzugt von 1 Pa bis 2,5 Pa, ausgewählt ist, aufweist.

Hierbei ist es möglich, dass der Fließpunkt *τ*_{f} des Systems, insbesondere der Komponente I, bei einer Scherdeformation y, die aus einem Bereich von 0,15 % bis 2,5 %, bevorzugt von 0,7 % bis 2,3 %, weiter bevorzugt von 1 % bis 2 %, ausgewählt ist, auftritt.

Der Fließpunkt wird bevorzugt mittels eines "Controlled Shear Deformation (CSD)"-Versuch gemessen. Vorzugsweise wird hierbei der Fließpunkt durch Messung mit einem luftgelagerten Rheometer in Oszillation bei einer konstanten Kreisfrequenz von 10 rad/s bei 20 °C mit einem koaxialen Zylinder CC10 gemessen. Die Scherdeformation, also die Amplitude, wird dabei variiert, wobei die Scherdeformation in einem Bereich von 0 % bis 100 % erhöht wird. Der Fließpunkt weist insbesondere die Scherspannung am Schnittpunkt des Speichermoduls G' und des Verlustmoduls G" auf. Als Kriterium für den Fließpunkt wird die Scherdeformation genommen, bei der der Verlauf des Speichermoduls G' und des Verlustmoduls G" einen Schnittpunkt aufweisen. Die Proben, beispielsweise Komponente I, werden zwei Wochen nach Herstellung vermessen. Die Proben werden unmittelbar vor der Messung aufgeschüttelt (250 ml Flasche, 1 min).

Durch vorstehenden Fließpunkt wird der Vorteil erhalten, dass das System während des Auftragens zwar eine hohe Fließfähigkeit aufweist, jedoch danach eine ausreichende Struktur ausbildet.

Damit eine Mischung aus Komponente I und Komponente II ausreichend durch Schütteln homogenisiert werden kann, ist es notwendig, dass die Komponente I eine spezifische Konsistenz aufweist. Da die Komponente I auf das Volumen bezogen vorzugsweise den Großteil der Mischung ausmacht, hat sie auch den größten Einfluss auf die Fließfähigkeit des gemischten Systems. Die Komponente I darf nicht zu zähflüssig sein, da sonst das Homogenisieren zu viel Kraft erfordern würde, wobei diese Kraft nicht durch das Schütteln geleistet werden kann. Weiter sollte Komponente I eine gute Fließfähigkeit aufweisen, damit es auch in kleine Risse hineinlaufen kann. Dies ist insbesondere vorteilhaft bei einer Anwendung zur Rissreparatur, insbesondere als Gießharz, in Estrichen und Böden.

Es ist möglich, dass das System eine Topfzeit, die aus einem Bereich von 5 min bis 20 min, bevorzugt von 6 min bis 15 min, weiter bevorzugt von 7 min bis 13 min, noch weiter bevorzugt von 8 min bis 11 min, ausgewählt ist, aufweist.

Die Topfzeit wird bestimmt, in dem der Temperaturanstieg einer Probe ermittelt wird. Die Probe umfasst hierbei 100 g Komponente I, welche auf 20 °C temperiert ist, und 2 g Komponente II (Dibenzoylperoxid-Paste (Benzoclean 50, Raichem)), wobei die Probe nach dem Zusammenfügen für eine Minute homogenisiert wird. Es wird ein Temperaturfühler, der an ein Temperaturmessgerät, beispielsweise ein Testo 925, in die Probe eingebracht. Die Temperatur wird in Messintervallen von 5 s abgelesen. Wenn der Temperaturanstieg ΔT innerhalb eines Messintervalls von 5 s größer als 3°C ist, wird die Messung beendet. Unter Topfzeit wird der Zeitraum in Minuten verstanden, der zwischen dem Start der Temperaturmessung nach dem Homogenisieren und dem letzten 5 s-Messintervalls, bei dem die Bedingung ΔT > 3 °C erfüllt ist, liegt. Der Temperaturanstieg ist auf eine Energiefreisetzung während der Polymerisation des Härteprozesses zurückzuführen. Die Topfzeit wird insbesondere durch die Polymerisation der Komponenten des Systems beschränkt. In dem untersuchten Zeitraum geht der Temperaturanstieg vorzugsweise mit einem Viskositätsanstieg einher. Nach dem Erreichen der Topfzeit wird die Probe bzw. das System insbesondere als nicht mehr rührbar gewertet, d. h., dass ein Rührwerkzeug, beispielsweise ein Holzmundspachtel, kann nicht mehr händisch in dem System bewegt werden.

Das erfindungsgemäße System weist eine Topfzeit, die einem Anwender ausreichend Zeit für die Verarbeitung und Anordnung des Systems ermöglicht, ohne dass die Weiterverarbeitung negativ beeinträchtigt ist, auf.

Es ist möglich, dass das System eine Trockenzeit, die aus einem Bereich von 5 min bis 30 min, bevorzugt von 6 min bis 15 min, weiter bevorzugt von 7 min bis 13 min, noch weiter bevorzugt von 8 min bis 11 min, ausgewählt ist, aufweist.

Zur Bestimmung der Trockenzeit wird eine Probe bestehend aus einer homogenen Mischung von Komponente I und Komponente II mit definierter Zusammensetzung, bei einer anfänglichen Probentemperatur von 20 °C bereitgestellt. Die homogene Mischung setzt sich insbesondere aus 100 g Komponente I und 2 g Komponente II (Dibenzoylperoxid-Paste (Benzoclean 50, Raichem)) zusammen, die nach dem Zusammenfügen für eine Minute homogenisiert wird. Aus der Probe wird eine Schicht mit ca. 2 mm Schichtstärke ausgebildet. Von der Probe ist vorzugsweise die Topfzeit bereits bekannt, oder wird während des Versuchs ermittelt. Anschließend wird in definierten Abständen vorzugsweise nach jeweils einer Minute und mit Hilfe eines saugfähigen Tuches (15 x 15 cm) die Klebrigkeit der Schicht bewertet. Hierzu wird das saugfähige Tuch vorzugsweise jede Minute nach Erreichen der Topfzeit mit einem Auflagedruck von 1500 g/cm² bis 2000 g/cm² auf die Oberfläche der Probe gedrückt. Die Auflagefläche soll dabei 4 cm² bis 5 cm² betragen. Der Auflagedruck wird für 2 s gehalten. Anschließend wird saugfähige Tuch wieder von der Oberfläche der Probe entfernt und es wird kontrolliert, ob nicht ausgehärtetes Material am saugfähigen Tuch an der Druckstelle verbleibt. Befindet sich nicht ausgehärtetes Material am saugfähigen Tuch wird die Oberfläche der Probe als "klebrig" gewertet. Die Klebrigkeit wird vorzugsweise jede Minute solange bestimmt, bis sich kein Material mehr an der Oberfläche des saugfähigen Tuches befindet. Die Trockenzeit ist nach dem Zeitraum erreicht, der nach dem Zusammenfügen des Systems notwendig ist, dass bei der Bestimmung der Klebrigkeit kein Material mehr am saugfähigen Tuch haften bleibt. Die Oberfläche der Probe wird dann nicht mehr als "klebrig" sondern als "trocken" definiert. Die Trockenzeit umfasst zumindest den Zeitraum der Topfzeit.

Es ist möglich, dass das System eine Schleifbarkeit nach maximal 24 h, bevorzugt nach maximal 12 h, weiter bevorzugt nach maximal 1 h, noch weiter bevorzugt nach maximal 30 min, ferner noch weiter bevorzugt nach maximal 20 min, aufweist. Bei einer bevorzugten Ausführungsform weist das System eine Schleifbarkeit, die aus einem Bereich von 1 min bis 24 h, bevorzugt von 2 min bis 12 h, weiter bevorzugt von 3 min bis 1 h, noch weiter bevorzugt von 5 min bis 30 min, ferner noch weiter bevorzugt von 10 min bis 20 min, auf.

Zur Bestimmung der Schleifbarkeit wird eine Probe aus einer homogenen Mischung von Komponente I und Komponente II mit definierter Zusammensetzung und bei einer anfänglichen Probentemperatur von 20 °C bereitgestellt. Die Probe umfasst hierbei 100 g Komponente I und 2 g Komponente II (Dibenzoylperoxid-Paste (Benzoclean 50, Raichem)), wobei diese nach dem Zusammenfügen für eine Minute homogenisiert wird. Aus der Probe wird eine Schicht mit ca. 2 mm Schichtstärke ausgebildet. Von der Probe ist vorzugsweise die Trockenzeit und bevorzugt die Topfzeit bereits bekannt, oder wird während des Versuchs ermittelt. Nach dem Erreichen der Trockenzeit wird in definierten Abständen, vorzugsweise nach jeweils einer Minute, mit einem Schleifpapier (P80, 2 x 3 cm) 20-mal über einen Teilbereich mit einer Fläche von ca. 2 x 6 cm der Schicht händisch geschliffen unter Ausübung von moderatem Druck. Unter moderatem Druck wird vorzugsweise ein Auflagedruck von 150 g/cm² bis 200 g/cm² verstanden. Die Schleifbarkeit ist nach dem Zeitraum erreicht, der nach dem Zusammenfügen des Systems notwendig ist, dass die Schleifpapierfläche, die mit der Schicht in Kontakt gebracht wird, zu weniger als 10 % zugesetzt wird. Der Zeitraum der notwendig ist, bis eine Schleifbarkeit erreicht wird, ist größer oder zumindest gleich der Trockenzeit und größer oder zumindest gleich der Topfzeit. Insbesondere ist eine Oberfläche trocken, wenn sie schleifbar ist.

Durch die vorstehende Topfzeit, wird dem Anwender ein ausreichender Verarbeitungszeitraum zur Verfügung gestellt, in dem das System, insbesondere bei der Verwendung als Gießharz, auch in kleine Risse fließen kann, ohne dass die Weiterverarbeitung negativ beeinträchtigt ist.

Es ist möglich, dass das Komponente I eine Lagerstabilität bei 60 °C von mindestens 14 Tagen, bevorzugt von mindestens 24 Tagen, weiter bevorzugt von mindestens 34 Tagen, aufweist.

Zur Bestimmung der Lagerstabilität werden ca. 200 ml Komponente I in einer verschlossenen Blechdose mit einem Durchmesser von 7 cm als Probe bereitgestellt. Die Füllhöhe beträgt ca. 5 cm. Anschließend wird die Probe in einen Trockenschrank bei 60 °C platziert. In definierten Abständen, vorzugsweise nach 21 h, 3 Tagen, 6 Tagen, 8 Tagen, 10 Tagen, 14 Tagen, 24 Tagen und 34 Tagen, wird die Komponente I auf irreversible Polymerisat-Klumpen untersucht. Unter Polymerisat-Klumpen wird hierbei eine formbare Masse ohne bestimmte Form verstanden, die zumindest ein Polymerisat umfassend das Monomer umfasst. Für die Untersuchung nach Polymerisat-Klumpen wird die Komponente I mit einer Holzmundspachtel händisch für 30 s gerührt. Währenddessen wird etwa alle 5 s die Holzmundspachtel kurz aus der Probe herausgenommen, um zu bestätigen, dass keine sichtbaren Polymerisat-Klumpen von der Spachtel abfließen. Weist die Probe nach den 30 s noch Polymerisat-Klumpen auf, werden diese als irreversibel gewertet. Eine unzureichende Lagerstabilität kann auf ein Polymerisieren der Bestandteile der Komponente I zurückzuführen sein, obwohl der Komponente I kein zusätzlicher Härter zugesetzt ist. Insbesondere ab einer Lagerstabilität von mindestens 14 Tagen, bei 60 °C werden reaktive Systeme im Wesentlichen als "Lagerstabil" gewertet.

Das erfindungsgemäße System kann als Gießharz, als Spachtelmasse und/oder als Reparaturkit verwendet werden. Als besonders geeignet ist die Verwendung als Gießharz, insbesondere zur Reparatur von Rissen in Estrichen und Böden.

Im Folgenden wird die Erfindung anhand von mehreren Ausführungsbeispielen unter Zuhilfenahme der beiliegenden Figur beispielhaft erläutert. Die gezeigten Ausführungsbeispiele sind nicht einschränkend zu verstehen.

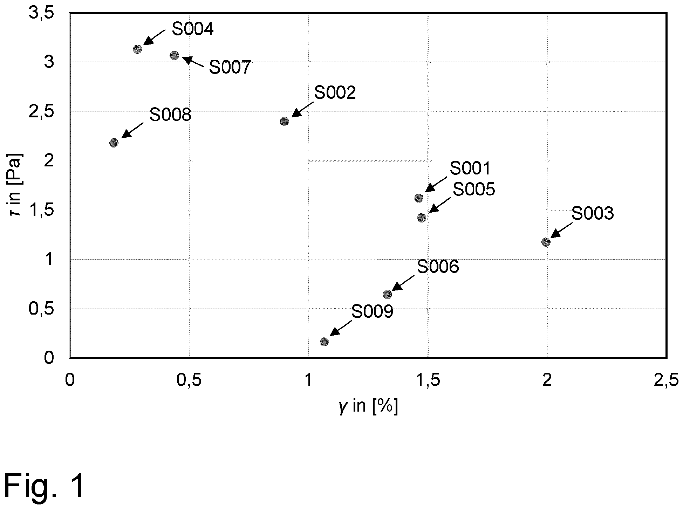

- Fig. 1: zeigt ein Diagramm in dem die Scherspannung in Abhängigkeit der Scherdeformation aufgetragen ist und die Fließpunkte von beispielhaften Systemen umfasst.

### Ausführungsbeispiele S001 bis S008

Es werden unterschiedliche Systeme S001 bis S008 erstellt, in denen insbesondere der Typ des Füllstoffs variiert ist. Die jeweiligen Einwaagen sind in Tabelle 1 und der Typ des Füllstoffs sowie weitere Angaben zum Füllstoff in Tabelle 2 angegeben. Für den Füllstoff von S005 (Dorsilit 6900) liegt kein mittlerer volumenbezogener Partikeldurchmesser vor, sondern ein Bereich des Partikeldurchmessers von 0 µm bis 40 µm.

Eine Komponente I wird hergestellt, indem Polyesteracrylat (Reagenz A, Ebecryl 5850, Allnex) bereitgestellt wird. Hierzu wird Butylmethacrylat enthaltend 0,14 Gew.-% Trimethylhydrochinon (TMH) (Reagenz B, Sigma-Aldrich, Nordmann) hinzugefügt. Anschließend werden N,N-Bis(2-hydroxyethyl)-p-toluidin (Reagenz D, Pergaquick A150, Pergan), Trimethylolpropan-tris(3-mercaptopropionat) (TMPMP) (Reagenz C, Thiocure, Bruno Bock) und eine 12,5 Gew.-%-igen Triphenylantimon Lösung in Butylmethacrylat (Reagenz F, Triphenylantimon (TPA), Strem Chemicals) hinzugefügt. Die Reagenzien werden mit einer Dissolverscheibe für eine Minute bei 400 rpm (Umdrehungen pro Minute) vermischt. Anschließend wird Kieselsäure (Reagenz G, R972, Evonik) unter Rühren zugeben und die Reagenzien für eine Minute bei 500 rpm vermischt. Der Füllstoff (Reagenz E) wird anschließend unter Rühren zugeben und die Reagenzien für 5 min bei 800 rpm vermischt. Abschließend wird unter Rühren für 3 min ein Vakuum (0,1 bar) angelegt, um Luftblasen zu entfernen. Es wird eine Komponente I eines reaktiven Systems erhalten.

Als Komponente II wird Dibenzoylperoxid-Paste (Benzoclean 50, Raichem) bereitgestellt.

Das jeweils erhaltene System wird entsprechend der Tabelle 1 nachfolgendend als System S001 bis S008 bezeichnet.

### Ausführungsbeispiel S009

Es wird ein Systeme S009 und erstellt. Das System S009 entspricht im Wesentlichen der Zusammensetzung des Systems S001, wobei die Reagenz A mit einem Polyurethanacrylat (Ebecryl 4820, Allnex) ersetzt ist. Die jeweiligen Einwaagen sind in Tabelle 3 und weitere Angaben des Füllstoffs in Tabelle 2 angegeben.

**Tabelle 1: Zusammensetzung der Systeme S001 bis S009. Der Typ von Reagenz E ist in Tabelle 2 angegeben. Reagenz A ist für die Systeme S001 bis S008 Ebecryl 5850 und für das System S009 Ebecryl 4820.**

| | **Reagenz** | **A** | | **B** | **C** | **D** | **F** | **G** | **E** |
|---|---|---|---|---|---|---|---|---|---|
| | | Ebecryl 5850 | Ebecryl 4820 | Butylmethacrylat | Thiocure TMPMP | Pergaquick A 150 | Triphenylantimon | R972 | siehe Tabelle 2 |
| **S001** | **m / g** | 224,8 | - | 168,6 | 6,7 | 6,7 | 11,2 | 19,7 | 562,3 |
| **S002** | **m / g** | 166,0 | - | 124,5 | 5,0 | 5,0 | 8,3 | 14,6 | 676,6 |
| **S003** | **m / g** | 239,7 | - | 179,7 | 7,2 | 7,2 | 12,0 | 21,0 | 533,2 |
| **S004** | **m / g** | 229,7 | - | 172,3 | 6,9 | 6,9 | 11,5 | 20,1 | 552,6 |
| **S005** | **m / g** | 227,1 | - | 170,3 | 6,8 | 6,8 | 11,4 | 19,9 | 557,7 |
| **S006** | **m / g** | 222,7 | - | 167,0 | 6,7 | 6,7 | 11,1 | 19,5 | 566,3 |
| **S007** | **m / g** | 229,7 | - | 172,3 | 6,9 | 6,9 | 11,5 | 20,1 | 552,6 |
| **S008** | **m / g** | 222,7 | - | 167,0 | 6,7 | 6,7 | 11,1 | 19,5 | 566,3 |
| **S009** | **m / g** | - | 224,8 | 168,6 | 6,7 | 6,7 | 11,2 | 19,7 | 562,3 |

**Tabelle 2: Füllstoff, bzw. Reagenz E der Systeme S001 bis S009 und deren Dichte ρ_{E} und mittleren volumenbezogenen Durchmesser d_{50,3}.**

| | **Reagenz E** | **Hersteller** | **Typ** | **ρ_{E} / g/cm³** | **d_{50,3} / µm** |
|---|---|---|---|---|---|
| **S001** | Calcitec V40 | Mineraria Saciles SPA | CaCO₃ | 2,7 | 7,0 |
| **S002** | Albawhite 70 | Sachtleben Minerals GmbH | BaSO₄ | 4,4 | 3,0 |
| **S003** | Apryal 22 | Nabaltec AG | Al(OH)₃ | 2,4 | 12,0 |
| **S004** | ASP 600 | BASF | Kaolin | 2,6 | 0,6 |
| **S005** | Dorsilit 6900 | Quarzsand GmbH | SiO₂ | 2,65 | - |
| **S006** | Finntalc M40 | Elementis | Talkum | 2,75 | 15,0 |
| **S007** | Silitin V85 | Hoffmann Minerals GmbH | Kieselsäure + Kaolinit | 2,6 | 7,5 |
| **S008** | Turcarp 1C | Mikrons | CaCO₃ + Beschichtung aus Stearinsäure | 2,75 | 1,8 |
| **S009** | Calcitec V40 | Mineraria Saciles SPA | CaCO₃ | 2,7 | 7,0 |

### Vergleichsbeispiele S010 und S011

Es werden zwei Systeme S010 und S011 als Vergleichsbeispiele erstellt, die kein Reagenz C aufweisen. Das System S010 entspricht im Wesentlichen der Zusammensetzung des Systems S001, wobei die Menge des Reagenzes C auf null gesetzt ist. Das System S011 entspricht im Wesentlichen der Zusammensetzung des System S001, wobei die Menge des Reagenzes C durch eine entsprechende zusätzliche Menge an Reagenz D ersetzt ist. Die Herstellung der Systeme S010 und S011 entspricht ansonsten der Herstellung des Systems S001. Die jeweiligen Einwaagen sind in Tabelle 3 und weitere Angaben des Füllstoffs in Tabelle 2 angegeben.

**Tabelle 3: Zusammensetzung der Vergleichsbeispiele Systeme S010 bis S011, die kein Reagenz C aufweisen.**

| | **Reagenz** | A | B | C | D | F | G | E |
|---|---|---|---|---|---|---|---|---|
| | | Ebecryl 5850 | Butylmethacrylat | Thiocure TMPMP | Pergaquick A 150 | Triphenylantimon | R972 | Calcitec V40 |
| **S010** | **m / g** | 224,8 | 168,6 | 0,0 | 6,7 | 11,2 | 19,7 | 569,0 |
| **S011** | **m / g** | 224,8 | 168,6 | 0,0 | 13,4 | 11,2 | 19,7 | 562,3 |

### Ergebnisse

### Fließpunkte

Es werden die Fließpunkte der jeweiligen Komponente I der vorstehend erhaltenen Systeme (siehe Tabelle 1) verglichen. Der Fließpunkt wird wie weiter oben beschrieben mittels eines "Controlled Shear Deformation (CSD)"-Versuchs gemessen, wobei der Schnittpunkt im Verlauf des Speichermoduls G' und des Verlustmoduls G" ermittelt wird.

In dem Diagramm von Fig. 1 sind die ermittelten Fließpunkte der Systeme S001 bis S009 dargestellt. Hierbei die Scherdeformation *γ* in Prozent auf der x-Achse und die Scherspannung *τ* in Pascal auf der y-Achse aufgetragen.

Dem Diagramm kann entnommen werden, dass die Systeme S004 und S007 den Fließpunkt bei hoher Scherspannung und niedriger Scherdeformation aufweisen. Hierdurch weisen diese beiden Systeme eine sehr geringe Fließfähigkeit auf, so dass deren Fließverhalten als standfest bezeichnet werden kann. Die Systeme S001, S002, S003 und S005 zeigen bezüglich der Fließfähigkeit ein bevorzugtes Verhalten. Sie haben ihre Fließpunkte bei mittleren Scherspannung und mittleren Scherdeformationen. Hierdurch weisen sie gute bis sehr gute Fließfähigkeiten auf. Die Systeme S006 S008 und S009 weisen im Vergleich zu den Systemen S001, S002, S003 und S005 geringere Scherspannungswerte bei mittlerer Scherdeformation auf, was sich negativ auf die Fließfähigkeit dieser Systeme auswirkt.

### Topfzeit, Trockenzeit und Schleifbarkeit

Es wird das Trocken- und Härteverhalten der Systeme S001 bis S011 verglichen. Die Ergebnisse sind in Tabelle 4 dargestellt. Die Topfzeit, die Trockenzeit und die Zeit bis zur Schleifbarkeit wird wie oben beschrieben ermittelt, wobei das System die Komponente I und Komponente II umfasst. Die Messung der Trockenzeit wird nach 1 h und die der Zeit bis zur Schleifbarkeit wird nach 24 h beendet.

In Bezug auf die Topfzeit, die Trockenzeit und die Zeit bis zur Schleifbarkeit können die Systeme S001, S002 und S009 als am besten gewertet werden. Das System S001 weist eine Topfzeit von 8 min, eine Trockenzeit von 14 min und eine Schleifbarkeit nach 20 min auf. Das System S002 weist für die vorstehenden Zeiten Werte von 7 min, 12 min bzw. 20 min auf. Das System S009 weist eine Topfzeit von 5 min, eine Trockenzeit von 10 min und eine Schleifbarkeit nach 30 min auf. Damit liegen diese Systeme innerhalb den als bevorzugt betrachteten Zeiträumen einer Trockenzeit von 5 min bis 30 min, bevorzugt von 6 min bis 15 min, sowie einer Schleifbarkeit nach weniger als 30 min. Die nächstbesten Werte sind mit System S003 erreichbar, welches eine Topfzeit von 10 min, eine Trockenzeit von 20 min und eine Schleifbarkeit nach 1 h aufweist.

Die anderen Systeme S004 bis S008 liegen alle außerhalb dieser Vorgabe. Dies, zeigt, dass die Art des Füllstoffes einen sehr großen Einfluss auf die Oberflächentrocknung hat, wobei bei der Kombination aus geeignetem Füllstoff, Reaktivverdünner, Polymer, Polymerisationsbeschleuniger und Additiven eine sehr gute Oberflächentrocknung erzeugbar ist.

Weiter wird durch den Vergleich der Ergebnisse des Systems S001 mit den Ergebnissen der Systeme S010 und S011 ersichtlich, dass ein thiolhaltiger Polymerisationsbeschleuniger neben einem aminhaltigen Polymerisationsbeschleuniger einen positiven Einfluss auf die Trockenzeiten und Zeiten bis zur Schleifbarkeit hat. Vielmehr weisen die Systeme S010 und S011, die nur einen aminhaltigen Polymerisationsbeschleuniger, aber keinen thiolhaltigen Polymerisationsbeschleuniger umfassen, bis zur Beendigung der jeweiligen Messung keine ausreichend trockene und damit auch keine schleifbare Oberfläche auf.

**Tabelle 4: Topfzeit, Trockenzeit und Schleifbarkeit der Systeme S001 bis S011**

| System | Topfzeit / min | Trockenzeit / min | Schleifbarkeit / min |
|---|---|---|---|
| **S001** | 8 | 14 | 20 |
| **S002** | 7 | 12 | 19 |
| **S003** | 10 | 20 | 60 |
| **S004** | 15 | >60 | >24h |
| **S005** | 10 | 23 | >24h |
| **S006** | 10 | 32 | >24h |
| **S007** | 11 | 12 | >24h |
| **S008** | 11 | 22 | >24h |
| **S009** | 5 | 10 | 30 |
| **S010** | 11 | >60 | >24h |
| **S011** | 10 | >60 | >24h |

### Lagerstabilität

Es wird die Lagerstabilität der Systeme S001 bis S009, insbesondere der jeweiligen Komponente I, verglichen, in dem wie weiter oben die Komponente I als Probe in einen Trockenschrank bei 60 °C platziert wird.

Nach 21 h, 3 Tagen, 6 Tagen, 8 Tagen, 10 Tagen, 14 Tagen, 24 Tagen und 34 Tagen werden die Proben jeweils auf irreversible Polymerisat-Klumpen überprüft. Wenn in einer Polymerisat-Klumpen vorliegen oder diese durch das Rühren reversibel sind, wird die jeweilige Probe mit einem "X" gekennzeichnet und die Messung fortgeführt. Liegen irreversible Polymerisat-Klumpen vor, wird das System mit einem "-" bewertet. Die Ergebnisse sind in Tabelle 5 dargestellt. Die Mindestdauer, die ein reaktives System bei 60°C und aushalten sollte, ohne dass sich nicht redispergierbare Partikel bilden, liegt bevorzugt mindestens 14 Tagen.

Bei dem System S006, welches Talkum als Füllstoff aufweist, treten bereits nach 3 Tagen Aushärtungen in Form von irreversiblen Polymerisat-Klumpen auf. Es ist möglich, dass diese irreversiblen Polymerisat-Klumpen auf eine Polymerisation der weiteren Bestandteile zurückzuführen ist, wobei die Polymerisation insbesondere durch ein Sediment aus Talkum gefördert wird. Hierdurch wird eine unzureichende Lagerstabilität erhalten. Die Systeme S004 und S007 weisen die nächstgeringste Lagerstabilität auf, wobei bei den Systemen S004 und S007 nach 6 Tagen Aushärtungen auftreten. Die anderen Systeme, also S001, S002, S003, S005, S008 und S009, sind bis zum Ende der Messung zur Lagerstabilität, also zu mindestens 34 Tage stabil.

**Tabelle 5: Lagerstabilität der Systeme bei 60 °C. Wird eine System nach der jeweiligen Zeit als stabil gewertet, wird dies mit einem "X" gekennzeichnet, anderenfalls mit "-".**

| | **System** | | | | | | | | |
|---|---|---|---|---|---|---|---|---|---|
| Zeit / h | **S001** | **S002** | **S003** | **S004** | **S005** | **S006** | **S007** | **S008** | **S009** |
| 21 h | X | X | X | X | X | X | X | X | X |
| 3d | X | X | X | X | X | - | X | X | X |
| 6d | X | X | X | - | X | - | - | X | X |
| 8d | X | X | X | - | X | - | - | X | X |
| 10 d | X | X | X | - | X | - | - | X | X |
| 14d | X | X | X | - | X | - | - | X | X |
| 24 d | X | X | X | - | X | - | - | X | X |
| 34 d | X | X | X | - | X | - | - | X | X |

Zusammenfassend ist aus den vorstehenden Ergebnissen ersichtlich, dass die es möglich ist, reaktive Systeme bereitzustellen, die zusätzlich zu einem aminhaltigen Polymerisationsbeschleuniger einen thiolhaltigen Polymerisationsbeschleuniger umfassen. Diese Systeme weisen verbesserte Topfzeiten, verbesserte Trockenzeiten und verbesserte Zeiten bis zur Schleifbarkeit, insbesondere gegenüber Systemen, die keine thiolhaltigen Polymerisationsbeschleuniger beinhalten, auf. Außerdem wird gezeigt, dass die Auswahl des Füllstoffs einen Einfluss zumindest auf die Fließeigenschaften und die Lagerstabilität hat, wobei sich insbesondere die Verwendung von hohen Anteilen an Talkum als nachteilig erwiesen hat.

Selbstverständlich können die aufgeführten Ausführungsvarianten beliebig miteinander kombiniert werden und stellen keine Limitierung dar.

## Patentansprüche

1. Styrolfreies reaktives System
**dadurch gekennzeichnet,**
wobei das System zumindest eine Komponente I aufweist, die die folgenden Reagenzien umfasst:
- ein Reagenz A, wobei Reagenz A ein Polymer, das aus der Gruppe, die aus Epoxy(meth)acrylat, Polyester(meth)acrylat, Polyether(meth)acrylat, Polyurethan(meth)acrylat, und Mischungen davon und Copolymeren davon und Blends davon besteht, ausgewählt ist, umfasst,
- Reagenz B, wobei Reagenz B ein (Meth)acrylat-Monomer umfasst,
- Reagenz C, wobei Reagenz C einen thiolhaltigen Polymerisationsbeschleuniger umfasst,
- Reagenz D, wobei Reagenz D einen aminhaltigen Polymerisationsbeschleuniger umfasst,
- Reagenz E, wobei Reagenz E einen Füllstoff umfasst, wobei Komponente I Talkum zu weniger als 3 Gew.-% umfasst.

2. Styrolfreies reaktives System nach einem der vorangegangenen Ansprüche,
**dadurch gekennzeichnet,**
**dass** das System eine Komponente II aufweist, die zumindest einen Härter aufweist,
wobei die Komponente I und die Komponente II räumlich voneinander getrennt bereitgestellt sind.

3. Styrolfreies reaktives System nach Anspruch 2,
**dadurch gekennzeichnet,**
**dass** für einen Volumenteil an Komponente I n Volumenteile Komponente II bereitgestellt werden, wobei n aus einem Bereich von 0,001 bis 0,2, bevorzugt von 0,01 bis 0,1, weiter bevorzugt von 0,03 bis 0,08, ausgewählt ist.

4. Styrolfreies reaktives System nach einem der vorangegangenen Ansprüche,
**dadurch gekennzeichnet,**
**dass** das (Meth)acrylat-Monomer von Reagenz B ein Alkyl(meth)acrylat und/oder Aryl(meth)acrylat ist, wobei das Alkyl oder Aryl Kohlenstoffatome aufweist, deren Anzahl aus einem Bereich von 1 bis 10, bevorzugt von 1 bis 8, weiter bevorzugt von 1 bis 6, noch weiter bevorzugt von 1 bis 4, ausgewählt ist.

5. Styrolfreies reaktives System nach einem der vorangegangenen Ansprüche,
**dadurch gekennzeichnet,**
**dass** der thiolhaltige Polymerisationsbeschleuniger von Reagenz C aus der Gruppe, die aus 3-Mercaptopropionaten, 2-Mercaptoacetaten, Thioglykolaten, Alkyldithiolen und Kombinationen davon und Derivaten davon besteht, ausgewählt ist.

6. Styrolfreies reaktives System nach einem der vorangegangenen Ansprüche,
**dadurch gekennzeichnet,**
**dass** der thiolhaltige Polymerisationsbeschleuniger von Reagenz C aus der Gruppe, die aus Trimethylolpropantrimercaptopropionat (TMPMP), Glykoldimercaptopropionat (GDMP), Pentaerythritoltetra(3-mercaptopropionat) (PETMP), Tris[2-(3-mercaptopropionyloxy)ethyl]isocyanurat (TEMPIC), und Mischungen davon und Derivaten davon besteht, ausgewählt ist.

7. Styrolfreies reaktives System nach einem der vorangegangenen Ansprüche,
**dadurch gekennzeichnet,**
**dass** der aminhaltige Polymerisationsbeschleuniger von Reagenz D aus der Gruppe, die aus Anilin, Xylidin, bevorzugt 2,3-Xylidin, 2,4-Xylidin, 2,5-Xylidin, 2,6-Xylidin, 3,4-Xylidin und/oder 3,5-Xylidin, p-Toluidin, m-Toluidin, und Mischungen davon und Derivaten davon besteht, ausgewählt ist.

8. Styrolfreies reaktives System nach einem der vorangegangenen Ansprüche,
**dadurch gekennzeichnet,**
**dass** der Füllstoff von Reagenz E aus der Gruppe, die aus Bariumsulfat (BaSO₄), Aluminiumhydroxid (Al(OH)₃), Kaolin (Al₂O₃/SiO₂), CaCO₃, SiO₂, Kieselsäure/Kaolinit (SiO₂/Al₂[(OH)₄Si₂O₅)]), Glaskugeln, Glasfasern, Polymerkugeln, Polymerfasern, Cellulose, Holzfasern, Ruß und Mischungen davon besteht, ausgewählt ist.

9. Styrolfreies reaktives System nach einem der vorangegangenen Ansprüche,
**dadurch gekennzeichnet,**
**dass** Komponente I einen oder mehrere der folgenden Anteile aufweist, bezogen auf das Gesamtgewicht der Komponente I, wobei das Gesamtgewicht sich jeweils zu 100 Gew.-% addiert:
| | |
|---|---|
| - Reagenz A: | 3 Gew.-% bis 50 Gew.-%, bevorzugt 5 Gew.-% bis 40 Gew.-%, weiter bevorzugt 10 Gew.-% bis 30 Gew.-%, |
| - Reagenz B: | 3 Gew.-% bis 30 Gew.-%, bevorzugt 5 Gew.-% bis 25 Gew.-%, weiter bevorzugt 7 Gew.-% bis 20 Gew.-%, |
| - Reagenz C: | 0,01 Gew.-% bis 10 Gew.-%, bevorzugt 0,1 Gew.-% bis 5 Gew.-%, weiter bevorzugt 0,2 Gew.-% bis 3 Gew.-%, |
| - Reagenz D: | 0,01 Gew.-% bis 5 Gew.-%, bevorzugt 0,1 Gew.-% bis 3 Gew.-%, weiter bevorzugt 0,2 Gew.-% bis 2 Gew.-%, |
| - Reagenz E: | 2 Gew.-% bis 80 Gew.-%, bevorzugt 30 Gew.-% bis 70 Gew.-%, weiter bevorzugt 40 Gew.-% bis 65 Gew.-%. |

10. Styrolfreies reaktives System nach einem der vorangegangenen Ansprüche,
**dadurch gekennzeichnet,**
**dass** das System, bevorzugt Komponente I, einen Fließpunkt *τ*_{f}, der aus einem Bereich von 0,5 Pa bis 3,5 Pa, bevorzugt von 0,7 Pa bis 3 Pa, weiter bevorzugt von 1 Pa bis 2,5 Pa, ausgewählt ist, aufweist.

11. Styrolfreies reaktives System nach einem der vorangegangenen Ansprüche,
**dadurch gekennzeichnet,**
**dass** das System eine Trockenzeit, die aus einem Bereich von 5 min bis 30 min, bevorzugt von 6 min bis 15 min, weiter bevorzugt von 7 min bis 13 min, noch weiter bevorzugt von 8 min bis 11 min, ausgewählt ist, aufweist.

12. Styrolfreies reaktives System nach einem der vorangegangenen Ansprüche,
**dadurch gekennzeichnet,**
**dass** das System eine Schleifbarkeit nach maximal 24 h, bevorzugt nach maximal 12 h, weiter bevorzugt nach maximal 1 h, noch weiter bevorzugt nach maximal 30 min, ferner noch weiter bevorzugt nach maximal 20 min, aufweist.

13. Styrolfreies reaktives System nach einem der vorangegangenen Ansprüche,
**dadurch gekennzeichnet,**
**dass** das Komponente I des Systems eine Lagerstabilität bei 60 °C von mindestens 14 Tagen, weiter bevorzugt von mindestens 24 Tagen, noch weiter bevorzugt von mindestens 34 Tagen, aufweist.

14. Styrolfreies reaktives System nach einem der vorangegangenen Ansprüche,
**dadurch gekennzeichnet,**
**dass** das System kein Vinyltoluol, kein Kobalt, und/oder kein Isocyanat aufweist.

15. Styrolfreies reaktives System nach einem der vorangegangenen Ansprüche,
**dadurch gekennzeichnet,**
**dass** das System als Gießharz, als Spachtelmasse und/oder als Reparaturkit, bevorzugt als Gießharz, verwendet wird.
